# EUROPEAN PATENT APPLICATION

(11) **EP 4 040 196 A1**
(43) Date of publication of application: **10.08.2022**
(21) Application number: 21305153.5
(22) Date of filing: 04.02.2021
(51) Int. Cl.: G01V 8/12, G02B 5/122

(54) **OPTICAL DETECTION SYSTEM FOR IMPROVED ALIGNMENT**

(71) Applicant: Schneider Electric Industries SAS, 92500 Rueil-Malmaison (FR)
(72) Inventor: CHARRIER, Pierre-Marie, 17110 Saint Georges de Didonne (FR); DUBOUILH, Gilles, 33430 Bazas (FR); VALLURI, Renuka, 16340 L'Isle-d'Espagnac (FR); LEYX, Patrick, 16000 Angoulême (FR)
(74) Representative: Plasseraud IP

(57) **Abstract**

Optical detection system (10) having: an emitter (12) providing a collimated light beam (16); a receiver (14) receiving the collimated light beam, the receiver having: a receiver lens (30) converging the collimated light beam along an optical axis (Xᵣ), and a corner reflector (34), the corner reflector having three planar surfaces (40a, 40b, 40c) perpendicular to each other and a symmetry axis (A) coinciding with an intersection point of the three planar surfaces and forming an equal angle with each of the planar surfaces, the corner reflector reflecting the collimated light beam (16) about the symmetry axis. The optical axis of the receiver lens is parallel to the symmetry axis of the corner reflector.

## Description

### Technical Field

This disclosure relates to optical detection systems comprising an emitter and a receiver. This disclosure also relates to a method for aligning an emitter and a receiver of an optical detection system

### Background Art

Optical detection systems rely on the properties of light to detect objects. Optical detection systems typically include an emitter, for providing light, and a receptor, for receiving light. When light provided by the emitter is interrupted or reflected by an object, the amount of light arriving at the receiver changes. The receiver detects the change and converts it to an electrical output.

An optical detection system may for example be a through-beam sensor. The emitter of the through-beam sensor aims a light beam directly towards the receiver. When an object interrupts the light beam travelling between the emitter and the receiver, the receiver's electrical output changes.

Through-beam sensors enable long distance sensing, as the receiver can be placed far away from the emitter. However, accurate detection relies on proper alignment of the receiver with the emitter to ensure that the light beam is received.

Classically, proper alignment is achieved by iteratively adjusting the positions of the emitter and the receiver. However, such an iterative process may be time consuming. For each iteration, it may be unclear which of the emitter or the receiver is misaligned, potentially leading to further misalignments. When the emitter and receiver are separated by large distances, such as over 10 m, an operator would be required to repeatedly travel back and forth.

An object of the present disclosure is to propose an optical detection system which enables simple and quick alignment of the emitter and the receiver, without introducing additional cost or complexity to the optical detection system.

### Summary

It is proposed an optical detection system comprising:
- an emitter configured to provide a collimated light beam;
- a receiver configured to receive the collimated light beam, the receiver comprising :
   - a receiver lens having an optical axis, the receiver lens adapted to converge the collimated light beam along the optical axis, and
   - at least one corner reflector, said at least one corner reflector comprising three planar surfaces perpendicular to each other and a symmetry axis coinciding with an intersection point of the three planar surfaces, said symmetry axis forming an equal angle with each of the planar surfaces, said at least one corner reflector adapted to reflect the collimated light beam about the symmetry axis,
wherein the optical axis of the receiver lens is parallel to the symmetry axis of said at least one corner reflector.

The following features, can be optionally implemented, separately or in combination one with the others:
- the receiver lens and the at least one corner reflector are in one piece;
- the collimated light beam is within the visible spectrum or within the infrared spectrum;
- the receiver comprises a plurality of corner reflectors forming an array, and the array is preferably a line or a square;
- the receiver comprises a first corner reflector and a second corner reflector aligned with the first corner reflector;
- the collimated light beam converges at a focal point of the receiver lens, and the receiver comprises a photodiode positioned at the focal point of the receiver lens;
- the receiver further comprises an indicator configured to indicate whether collimated light is received by the photodiode;
- the at least one corner reflector extend on a side of the receiver comprising the photodiode;
- the receiver lens and each corner reflector are made of optically transparent material, preferably the receiver lens and each corner reflector are made of polycarbonate, polymethyl methacrylate (PMMA), a cyclo olefin polymer (COP) or glass;
- the emitter comprises an LED and an emitter lens, and the LED is positioned at a focal point of the emitter lens to provide the collimated light beam;
- the LED is pulse modulated;
- the emitter comprises a first housing and the receiver comprises a second housing, distinct from the first housing;
- the emitter and the receiver are around 15 m apart.

In another aspect, it is proposed a method for aligning an optical detection system according to any of the preceding claims, wherein the method comprises:
- providing, by the emitter, the collimated light beam;
- adjusting the position of the emitter to obtain a reflected collimated light beam at the emitter;
- following adjustment of the emitter, adjusting the position of the receiver to align the collimated light beam with the optical axis of the receiver lens.

### Brief Description of Drawings

Other features, details and advantages will be shown in the following detailed description and on the figures, on which:
[Fig. 1] schematically illustrates a cross sectional view of an optical detection system according to an embodiment.
[Fig. 2] illustrates a detail of figure 1.
[Fig. 3] illustrates an alternative embodiment of figure 2.
[Fig. 4] illustrates a perspective view of an optical part that can be implemented into the optical detection system of figure 1 according to an embodiment.
[Fig. 5] illustrates a back view of the optical part of figure 4.
[Fig. 6] illustrates an example of an array that can be implemented in the optical part of figure 3 according to an embodiment.
[Fig. 7] illustrates an example of a result of the optical detection system of figure 1.
[Fig. 8] illustrates a method for aligning the components of the optical detection system of figure 1.
[Fig. 9A] illustrates the components of the optical detection system of figure 1 in a first position.
[Fig. 9B] illustrates the components of the optical detection system of figure 1 in a second position.
[Fig. 9C] illustrates the components of the optical detection system of figure 1 in a third position.

### Description of Embodiments

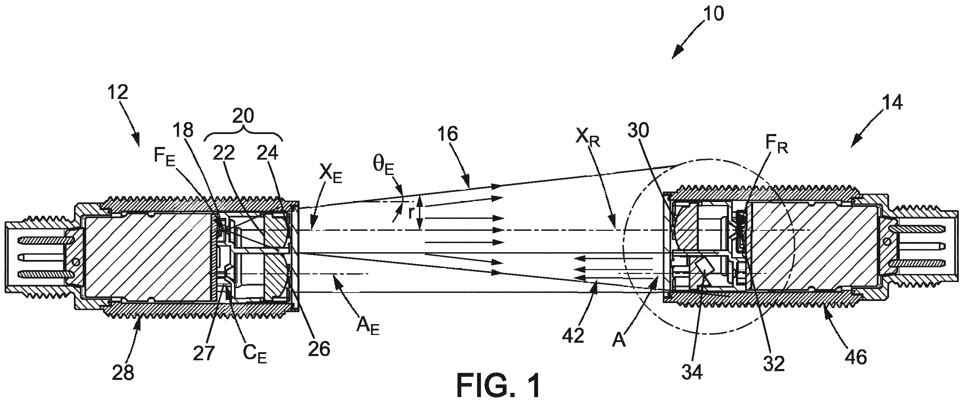

Figure 1 illustrates an optical detection system 10 comprising an emitter 12 and a receiver 14. The emitter 12 provides a collimated light beam 16. The receiver 14 is configured to receive the collimated light beam 16 provided by the emitter 12. The emitter and the receiver are distanced from one another to detect objects interrupting the collimated light beam 16 travelling from the emitter 12 to the receiver 14.

The emitter 12 essentially comprises a light-emitting diode (LED) 18 and an emitter lens 20.

The LED 18 is connected to an electronic circuit to receive an electric current. The LED 18 converts the electric current into light. The LED 18 may be pulse modulated, and may emit light repeatedly at fixed intervals. Such modulation may improve the removal of light interferences arising between the emitter 12 and the receiver 14.

Here, the LED 18 provides light within the visible spectrum. By visible spectrum, it is to be understood that the light provided has a wave length between 380 and 700 nm. An operator may therefore see the collimated light beam 16. Alternatively, the LED 18 could provide light within the infrared (IR) spectrum, to be detected by a photoreceptor. The LED 18 could also provide light in the ultra violet (UV) domain.

The emitter lens 20 is a converging lens 20 having an optical axis Xₑ and a focal point Fₑ coincident with the optical axis Xₑ. The LED 18 is positioned at the focal point Fₑ of the emitter lens 20. Light provided by the LED 18 at the focal point Fₑ exits the emitter lens 20 collimated parallel to the optical axis Xₑ. The collimated light beam 16 may be directed towards the receiver 14.

It should be noted that the collimated light beam 16 diverges as it moves away from the emitter lens 20. An angle of divergence **θ**_{E} of the collimated light beam 16 may be around 1.2°. The angle of divergence **θ**_{E} causes a spread of the collimated light beam 16 measured from the optical axis Xₑ. A radius r of the collimated light beam 16 increases with distance away from the emitter lens 20.

Here, the emitter lens 20 has a flat face 22 and a convex surface 24 protruding from the flat face 22. The flat face 22 is oriented towards the LED 18, and the convex surface 24 is oriented towards the outside of the emitter 12. In other examples, the flat face 22 may be oriented towards the outside of the emitter 12 and the convex surface 24 may be oriented towards the LED 18. In yet another example, the emitter lens 20 may have two convex surfaces.

The emitter 12 may optionally comprise a second converging lens 26 also having an optical axis A_{E} and a focal point C_{E}. A photoreceptor 27 may be positioned at the focal point C_{E} of the second converging lens 26. Thus, light rays arriving at the second converging lens 26 parallel to the optical axis A_{E} converge at the focal point C_{E} to be detected by the photoreceptor 27.

In the example illustrated in figure 1, the second converging lens 26 is positioned vertically below the emitter lens 20. The optical axis A_{E} of the second converging lens 26 is parallel to the optical axis X_{E} of the emitter lens 20. The emitter 12 can therefore be used as a reflective sensor. In addition, the second converging lens 26 may detect the collimated light beam 16 reflected by the receiver 14 to automatically determine whether the receiver 14 is aligned with the emitter 12.

The second converging lens 26 may be in one piece with the emitter lens 20 to form a single emitter optical part. The emitter optical part insures alignment of the optical axis X_{E} of the emitter lens 20 and the optical axis A_{E} of the second converging lens 26. Alternatively, the emitter lens 20 and the second converging lens 26 can be in two separate parts.

The emitter lens 20, and the second converging lens 26 if applicable, is made of optically transparent material. The optically transparent material may be plastic, preferably polycarbonate, polymethyl methacrylate (PMMA) or a cyclo olefin polymer (COP), or glass.

The emitter lens 20, the LED 18, the second converging lens 26 and photoreceptor 27 if applicable, and electronic components used for powering, operation and control of the emitter 12 are received in a first housing 28. The first housing 28 may be fixed to a structural element to secure position of the emitter 12.

In the illustrated example, the first housing 28 has a cylindrical shape. The optical axis Xₑ of the converging lens 20 and, if applicable, the optical axis A_{E} of the second converging lens 26 may be parallel to a longitudinal axis of the first housing 28. Alternatively, the first housing 28 could be rectangular or any other shape.

The receiver 14 essentially comprises a receiver lens 30, a photoreceptor 32 and at least one corner reflector 34.

The receiver lens 30 is also a converging lens 30 having an optical axis X_{R} and a focal point F_{R} coinciding with the optical axis X_{R}. The photoreceptor 32 is positioned at the focal point F_{R} of the receiver lens 30. The collimated light beam 16 arriving at the receiver lens 30 parallel to the optical axis X_{R} converges at the focal point F_{R} of the receiver lens 30 to be detected by the photoreceptor 32.

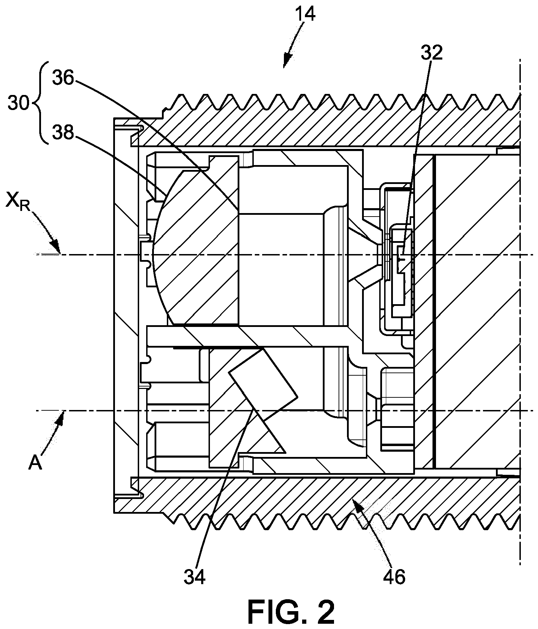

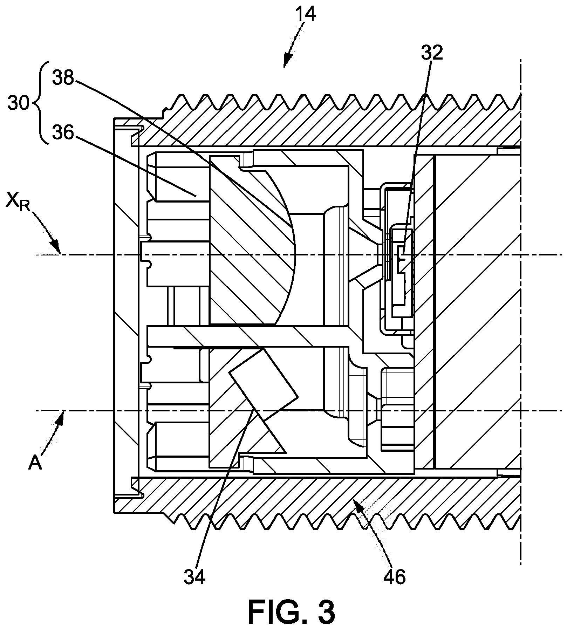

In an example shown in figure 2, the receiver lens 30 has a flat face 36 and a convex surface 38 protruding from the flat face 36. The flat face 36 is oriented towards the photoreceptor 32 and the convex surface 38 faces towards the outside of the receiver 14. In another example shown in figure 3, the flat face 36 is oriented towards the outside of the receiver 14 and the convex surface 38 faces towards the photoreceptor 32.

The photoreceptor 32 converts the converged collimated light beam 16 into an electrical output. Further electronic components may amplify and process the electrical output to determine whether an object has interfered with the collimated light beam 16 travelling between the emitter 12 and the receiver 14.

The at least one corner reflector 34 is arranged close to the receiver lens 30. The receiver lens 30 and each corner reflector 34 both receive the collimated light beam 16 provided by the emitter 12. In the illustrated examples, the one or more corner reflectors 34 are positioned vertically below the receiver lens 30. However, the one or more corner reflectors 34 could be positioned at any position around the receiver lens 30.

Each corner reflector 34 has three planar surfaces 40a, 40b, 40c perpendicular to each other. Each corner reflector 34 has a symmetry axis A coinciding with an intersection point of the three planar surfaces 40a, 40b, 40c and forming an equal angle with each of the planar surfaces 40a, 40b, 40c. The collimated light beam 16 arriving at each corner reflector 34 is reflected about the symmetry axis A. A reflected collimated light beam 42 is obtained even if the collimated light beam 16 does not arrive parallel to the symmetry axis A of each corner reflector 34. The reflected collimated light beam 42 indicates that the receiver 14 is within the radius r of the collimated light beam 16.

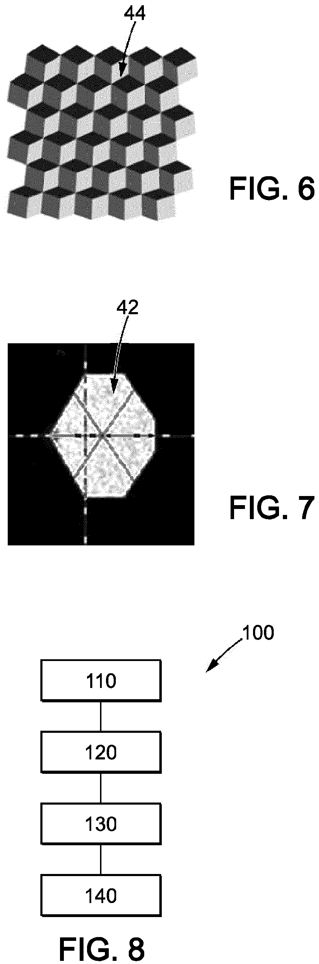

The symmetry axis A of each corner reflector 34 is parallel to the optical axis X_{R} of the receiver lens 30. In other words, each of the three planar surfaces 40a, 40b, 40c of each corner reflector 34 forms an equal angle with the flat face 36 of the receiver lens 30. The reflected collimated light beam 42 may be observed at the emitter 12, as shown in figure 7. The position of the emitter 12 may be adjusted until the reflected collimated light beam 42 is observed at the emitter 12.

Here, each corner reflector 34 is a solid cube corner. Each corner reflector 34 is a cube of solid material. However, each corner reflector 34 could also be formed by three sheets joined together to form the three planar surfaces 40a, 40b, 40c.

Each corner reflector 34 extends towards the inside of the receiver 14. In other words, each corner reflector 34 extends on a side of the receiver 14 comprising the photodiode 32. Thus, each corner reflector 34 extends in the same direction as the direction of travel of the collimated light beam 16.

In the example illustrated in figure 2, the convex surface 38 of the receiver lens 30 and each corner reflector 34 extend on either side of the flat surface 36. However, in the example illustrated in figure 3, the convex surface 38 of the receiver lens 30 and each corner reflector 34 protrude from the same side of flat surface 36.

The receiver 14 can comprise a single corner reflector 34, or a plurality of corner reflectors 34. The plurality of corner reflectors may be arranged to form an array 44. By array, as shown in figure 6, it is to be understood that the plurality of corner reflectors 34 are regularly arranged. The plurality of corner reflectors 34 may form a line, a square or any other shape. The number of corner reflectors 34 can be adapted to limit the size of the receiver 14 while still satisfactorily reflecting the collimated light beam 16.

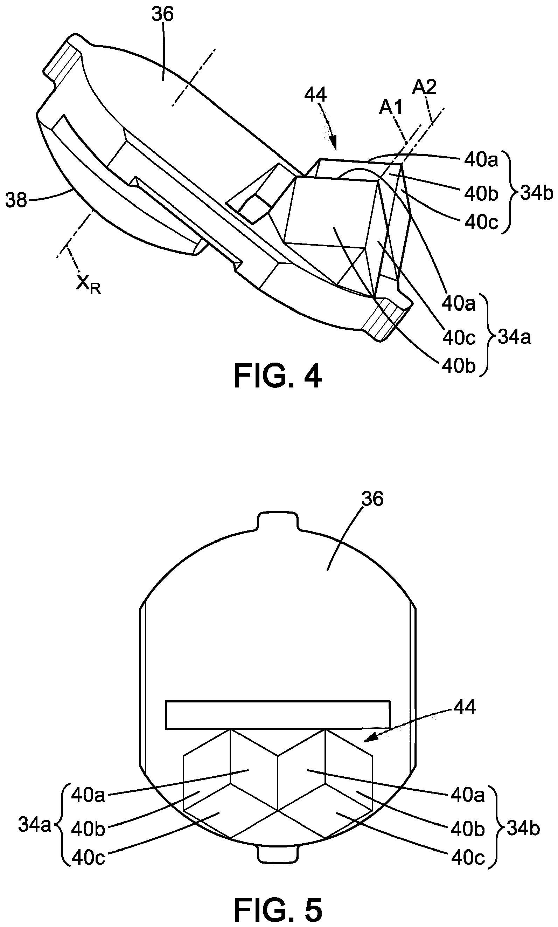

In the example illustrated in figures 4 and 5, the receiver 14 comprises two corner reflectors 34a, 34b aligned with each other. A first corner reflector 34a is adjacent to a second corner reflector 34b. Here, a symmetry axis A₁ of the first corner reflector 34a and a symmetry axis A₂ of the second corner reflector 34b are equally distanced with the optical axis X_{R} of the receiver lens 30.

The one or more corner reflectors 34 can be in one piece with the receiver lens 30 to form a single optical part. The single optical part ensures alignment of the optical axis X_{R} of the receiver lens 30 with the symmetry axis A of each corner reflector 34. Alternatively, one or more of the corner reflectors 34 may be separate parts. In such a case, the one or more corner reflectors 34 may be removed from the receiver 14 after alignment is achieved, reducing the overall size of the receiver 14.

The one or more corner reflectors 34 and the receiver lens 30 are both made out of an optically transparent material. The optical transparent material may for example be a plastic, preferably polycarbonate, polymethyl methacrylate (PMMA) or a cyclo olefin polymer (COP), or glass.

In addition, the receiver 14 comprises an indicator (not illustrated) adapted to indicate whether the photoreceptor 32 is receiving the collimated light beam 16. The indicator may for example be an LED, which can be switched on when the collimated light beam 16 is received. Thus, the indicator indicates when the optical axis X_{R} of the receiver lens 30 is aligned with the optical axis X_{E} of the emitter lens 20. The indicator may be used to adjust the position of the receiver 14 and overcome the spread of the collimated light beam 16 caused by the angle of divergence **θ**_{E}. The reception of the collimated light beam 16 by the receiver lens 30 may be improved.

The receiver lens 30, the photoreceptor 32, the one or more corner reflectors 34 and electronic components used for powering, operation and control of the receiver 14 are received in a second housing 46. The second housing 46 may be fixed to a structural element to secure position of the receiver 14.

In the illustrated example, the second housing 46 has a cylindrical shape. The optical axis X_{R} of the receiver lens 30 and the symmetry axis A of each corner reflector 34 may be parallel to a longitudinal axis of the second housing 46. Alternatively, the second housing 46 could be rectangular or any other shape.

The second housing 46 is distinct from the first housing 28, so that the emitter 12 and the receiver 14 can be distanced from each other. For example, the emitter 12 and the receiver 14 may be placed over 50 m apart. Preferably, the emitter 12 and receiver are placed up to 15 m apart. A distance d separating the emitter 12 and the receiver 14 overlaps the distance over which objects are to be detected by the optical detection system 10.

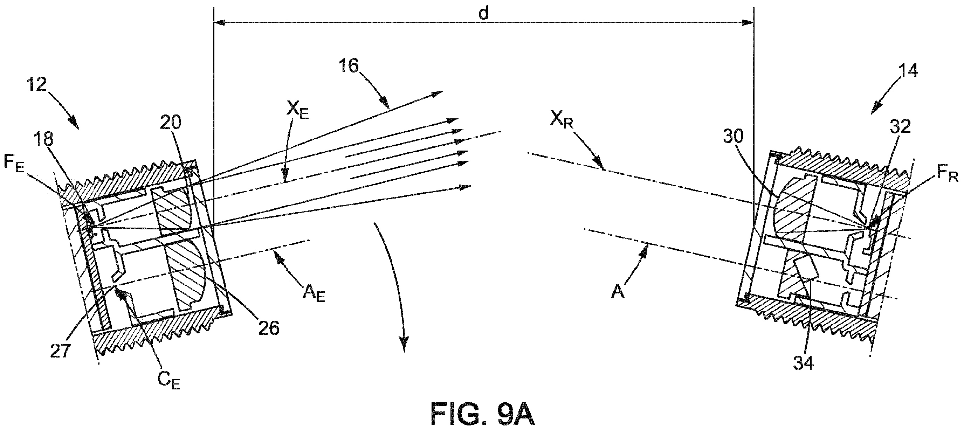

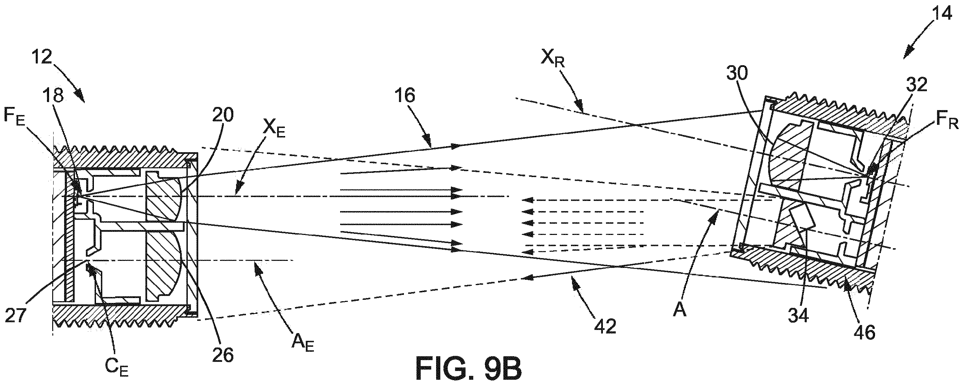

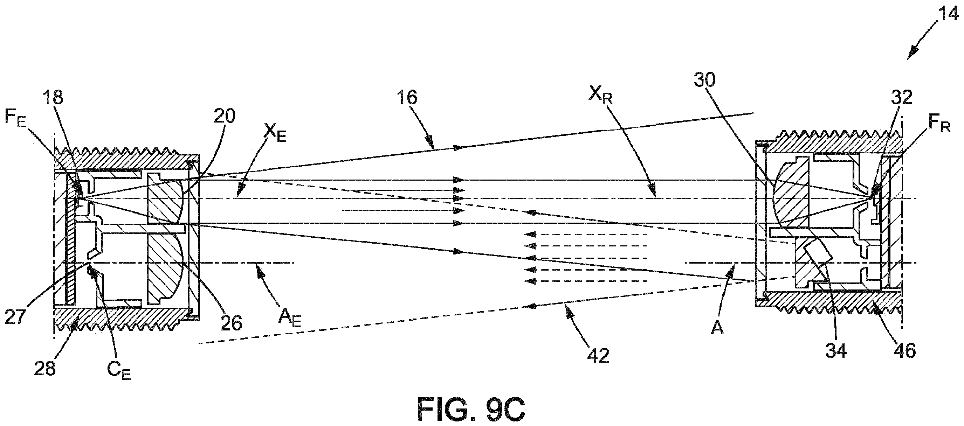

Hereafter, a method 100 for achieving alignment between the emitter 12 and the receiver 14 is described in more detail, with reference to figures 9a, 9b and 9c. According to method 100, alignment can be achieved without the operator needing to travel back and forth to iteratively adjust the position of the emitter 12 and the receiver 14.

A first step 110, illustrated at figure 9a, comprises positioning the emitter 12 and the receiver 14 at the distance d. The distance d includes the distance wherein objects are to be detected by the optical detection system 10. Preferably, the distance d is around or below 15 m.

A second step 120 comprises providing, by the emitter 12, the collimated light beam 16. The collimated light beam 16 is provided by switching on the LED 18 of the emitter 12. The light from the LED 18 is collimated by the emitter lens 20. The collimated light beam 16 travels towards the receiver 14. However, the collimated light beam 16 diverges as it travels towards the receiver 14 following the divergence angle **θ**_{E}. The collimated light beam 16 spreads.

A third step 130 comprises adjusting the position of the emitter 12 until the receiver 14 is within the radius r of the collimated light beam 16. The receiver 14 is within the radius r of the collimated light beam 16 when the reflected light beam 42 is observed at the emitter 12. As shown in figure 9b, the reflected collimated light beam 42 may be observed even if the collimated light beam 16 is not parallel to the optical axis X_{R} of the receiver lens 30. The reflected collimated light beam 42 may be observed by an operator or detected by the photoreceptor 27 of the emitter 12.

Step 140, illustrated at figure 9c, consists in adjusting the position of the receiver 14 until the collimated light beam 16 is detected by the photodiode 32 of the receiver 14 The detection of the collimated light beam 16 by the photodiode 32 indicates that the optical axis X_{E} of the emitter lens 20 is aligned with the optical axis X_{R} of the receiver lens 30. Adjusting the position of the receiver 14 overcomes the spread caused by the angle of divergence **θ**_{E} of the collimated light beam 16. The indicator (not illustrated) may indicate whether the collimated light beam 16 is detected by the photoreceptor 32.

## Claims

1. Optical detection system (10) comprising:
- an emitter (12) configured to provide a collimated light beam (16);
- a receiver (14) configured to receive the collimated light beam (16), the receiver (14) comprising :
• a receiver lens (30) having an optical axis (X_{R}), the receiver lens (30) adapted to converge the collimated light beam (16) along the optical axis (Xᵣ), and
• at least one corner reflector (34), said at least one corner reflector (34) comprising three planar surfaces (40a, 40b, 40c) perpendicular to each other and a symmetry axis (A) coinciding with an intersection point of the three planar surfaces (40a, 40b, 40c), said symmetry axis (A) forming an equal angle with each of the planar surfaces (40a, 40b ,40c), said at least one corner reflector (34) adapted to reflect the collimated light beam (16) about the symmetry axis (A),
wherein the optical axis (X_{R}) of the receiver lens (30) is parallel to the symmetry axis (A) of said at least one corner reflector (34).

2. Optical detection system (10) according to claim 1, wherein the receiver lens (30) and the at least one corner reflector (34) are in one piece.

3. Optical detection system (10) according to any of the preceding claims, wherein the collimated light beam (16) is within the visible spectrum or within the infrared spectrum.

4. Optical detection system (10) according to any of the preceding claims, wherein the receiver (14) comprises a plurality of corner reflectors (34) forming an array (44), and the array is preferably a line or a square.

5. Optical detection system (10) according to any of the preceding claims, wherein the receiver (14) comprises a first corner reflector (34a) and a second corner reflector (34b) aligned with the first corner reflector (34a).

6. Optical detection system (10) according to any of the preceding claims, wherein the collimated light beam (16) converges at a focal point (Fᵣ) of the receiver lens (30), and the receiver (14) comprises a photodiode (32) positioned at the focal point (Fᵣ) of the receiver lens (30).

7. Optical detection system (10) according to claims 6, wherein the receiver (14) further comprises an indicator configured to indicate whether collimated light (16) is received by the photodiode (32).

8. Optical detection system (10) according to claim 6 or 7, wherein said at least one corner reflector (34) extend on a side of the receiver (14) comprising the photodiode (32).

9. Optical detection system (10) according to any of the preceding claims, wherein the receiver lens (30) and each corner reflector (34) are made of optically transparent material, preferably the receiver lens (30) and each corner reflector (34) are made of polycarbonate, polymethyl methacrylate (PMMA), a cyclo olefin polymer (COP) or glass.

10. Optical detection system (10) according to any of the preceding claims, wherein the emitter (12) comprises an LED (18) and an emitter lens (20), and the LED (18) is positioned at a focal point (Fₑ) of the emitter lens (20) to provide the collimated light beam (16).

11. Optical detection system (10) according to claim 10, wherein the LED (18) is pulse modulated.

12. Optical detection system (10) according to any of the preceding claims, wherein the emitter (12) comprises a first housing (28) and the receiver (14) comprises a second housing (46), distinct from the first housing (28).

13. Optical detection system (10) according to any of the preceding claims, wherein the emitter (12) and the receiver (14) are around 15 m apart.

14. Method for aligning an optical detection system (10) according to any of the preceding claims, wherein the method comprises:
- providing, by the emitter (12), the collimated light beam (16);
- adjusting the position of the emitter (12) to obtain a reflected collimated light beam (42) at the emitter (12);
- following adjustment of the emitter (12), adjusting the position of the receiver (14) to align the collimated light beam (16) with the optical axis (X_{R}) of the receiver lens (30).
